Europäisches Patentamt

European Patent Office

Office européen des brevets

(19)

(11) **EP 0 792 480 B1**

(12) **EUROPÄISCHE PATENTSCHRIFT**

(45) Veröffentlichungstag und Bekanntmachung des Hinweises auf die Patenterteilung:
**26.05.1999 Patentblatt 1999/21**

(21) Anmeldenummer: **95935803.7**

(22) Anmeldetag: **24.10.1995**

(51) Int Cl.$^6$: **G05B 19/19**

(86) Internationale Anmeldenummer:
**PCT/DE95/01479**

(87) Internationale Veröffentlichungsnummer:
**WO 96/16360 (30.05.1996 Gazette 1996/25)**

(54) **VORRICHTUNG UND VERFAHREN ZUR REGELUNG DER BEWEGUNG EINES GEGENSTANDES**

DEVICE AND PROCESS FOR CONTROLLING THE MOVEMENT OF AN OBJECT

DISPOSITIF ET PROCEDE POUR LA REGULATION DU DEPLACEMENT D'UN OBJET

(84) Benannte Vertragsstaaten:
**CH DE FR GB LI SE**

(30) Priorität: **19.11.1994 DE 4441240**

(43) Veröffentlichungstag der Anmeldung:
**03.09.1997 Patentblatt 1997/36**

(73) Patentinhaber: **Leica Microsystems Heidelberg GmbH**
**69120 Heidelberg (DE)**

(72) Erfinder: **ENGELHARDT, Johann**
**D-76669 Bad Schönborn (DE)**

(74) Vertreter: **Stamer, Harald et al**
**Leica Microsystems International Holdings GmbH,**
**Konzernstelle Patente + Marken**
**Postfach 2020**
**35530 Wetzlar (DE)**

(56) Entgegenhaltungen:
**EP-A- 0 311 127        EP-A- 0 543 654**
**EP-A- 0 559 397        EP-A- 0 605 909**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf eine Vorrichtung zur Regelung der Bewegung eines Gegenstandes nach dem Oberbegriff des Patentanspruchs 1. Weiterhin bezieht sich die Erfindung auf ein Verfahren nach dem Oberbegriff des Patentanspruchs 8.

Bei der Regelung von Aktoren zur Positionierung von Gegenständen, die auf einer vorgegebenen Bahn bewegt werden, werden üblicherweise PID-Regler eingesetzt. Mit diesen sind unter konstanten oder linearen Verhältnissen gute Regelergebnisse erzielbar. Da sich das System (Regelstrecke) oftmals nicht linear verhält, beispielsweise treten Nichtlinearitäten in Folge von Reibungseffekten oder beim Aufnehmen eines Gegenstandes durch einen Roboterarm auf, ändern sich die Parameter des Systems (Regelstrecke) abhängig vom Ort und der Zeit. Durch die auftretenden Nichtlinearitäten ergeben sich Ungenauigkeiten bei der Bahnbewegung des Gegenstandes.

Aus der EP 0 605 909 A1 ist eine Steuerung zur Kompensation der Nicht-Linearitäten eines mechanischen Systems mit einem Kompensator, einem Referenzmodell und einer Adaptionseinheit bekannt. Das Referenzmodell beschreibt den linearen Teil des mechanischen Systems, während der Kompensator ein Modell des nichtlinearen Teils des Systems enthält. Das nichtlineare Modell im Kompensator wird mit Hilfe der Adaptionseinheit den tatsächlichen Nicht-Linearitäten des mechanischen Systems angepaßt. Dabei erfolgt die Anpassung in Abhängigkeit der Differenz zwischen den Ausgangssignalen des mechanischen Systems und dem Referenzmodell. Zur Beschreibung des nichtlinearen Verhaltens des mechanischen Systems können verschiedene Modelle genutzt werden.

Der Erfindung liegt das technische Problem zugrunde, eine Vorrichtung und ein Verfahren anzugeben, so daß eine genaue und schnelle Bewegung des Gegenstandes auf einer vorprogrammierten Bahn ermöglicht wird.

Das technische Problem wird durch die Merkmale des Anspruchs 1 und des Anspruchs 8 gelöst.

Die Erfindung weist eine Kompensationseinheit auf, in der ständig eine das System charakterisierende Bewegungsgleichung gelöst wird. In der Kompensationseinheit werden somit ständig die auf das System bzw. die Regelstrecke wirkenden Kräfte ermittelt und zu einer Kompensationsgröße aufsummiert. Diese Kompensationsgröße wirkt dann unmittelbar als Stellgröße auf das System (Regelstrecke) ein. Dadurch, daß die Kompensationsgröße unmittelbar auf die Regelstrecke einwirkt, tritt eine Idealisierung des Systems ein. Es werden nämlich ständig die auf den Gegenstand einwirkenden Kräfte kompensiert, so daß die Reglereinheit nur die von der Führungsgröße aufgeprägten Änderungen einregeln braucht. Der Regelbereich der Reglereinheit ist somit relativ klein. Durch die in der Kompensationseinheit erzeugte Kräftekompensation wird eine genauere und schnellere Bahnbewegung des Gegenstandes von einem Ort zu einem anderen Ort ermöglicht. Der Bereich der zulässigen Geschwindigkeiten des Gegenstandes wird erhöht.

Mit der Erfindung wird somit die Reglerdynamik erhöht. Darüber hinaus werden automatisch lokale und zeitliche Veränderungen der Systemparameter kompensiert.

Nach einer Weiterbildung der Erfindung wird die Ausgangsgröße des Positionsdetektors als Regelgröße einer Vergleichseinheit einerseits und an den Eingang der Kompensationseinheit andererseits zugeführt Die Reglereinheit und die Kompensationseinheit sind parallel zueinander angeordnet, wobei die Ausgangsgrößen der Reglereinheit und der Kompensationseinheit in einer Addiereinheit zu einer Stellgröße addiert werden.

Nach einer Ausgestaltung der Erfindung weist die Reglereinheit einen digitalen Regler, vorzugsweise einen PID-Regler, auf. Sowohl die Reglereinheit als auch die Kompensationseinheit sind Bestandteil eines Digitalrechners.

Nach einer weiteren Ausgestaltung der Erdindung wird die Führungsgröße in der Führungsgrößeneinheit derart vorgegeben, daß die Stellgröße sprung- oder knickfrei ausgebildet ist. Vorzugsweise entspricht der zeitliche Verlauf der Stellgröße einer Gaußschen Glockenform. Hierdurch wird ein ruckfreier Betrieb des zu bewegenden Gegenstandes ermöglicht. Insbesondere wird bei raschen Beschleunigungen nur ein geringer Anteil von Schwingungen auf den Gegenstand übertragen.

Weitere vorteilhafte Ausgestaltungen der Erfindung ergeben sich aus den Unteransprüchen.

Ausführungsbeispiele der Erfindung sind in der Zeichnung dargestellt und werden im folgenden näher beschrieben.

Es zeigen:

Fig. 1     Blockschaltplan eines ersten Ausführungsbeispiels der Erfindung,

Fig. 2     Blockschaltbild eines zweiten Ausführungsbeispiels der Erfindung,

Fig. 3     zeitlicher Verlauf der Stellgröße, der Geschwindigkeit und des Ortes bei Bewegung eines Gegenstandes von einem Ort $x_1$ zu einem Ort $x_2$.

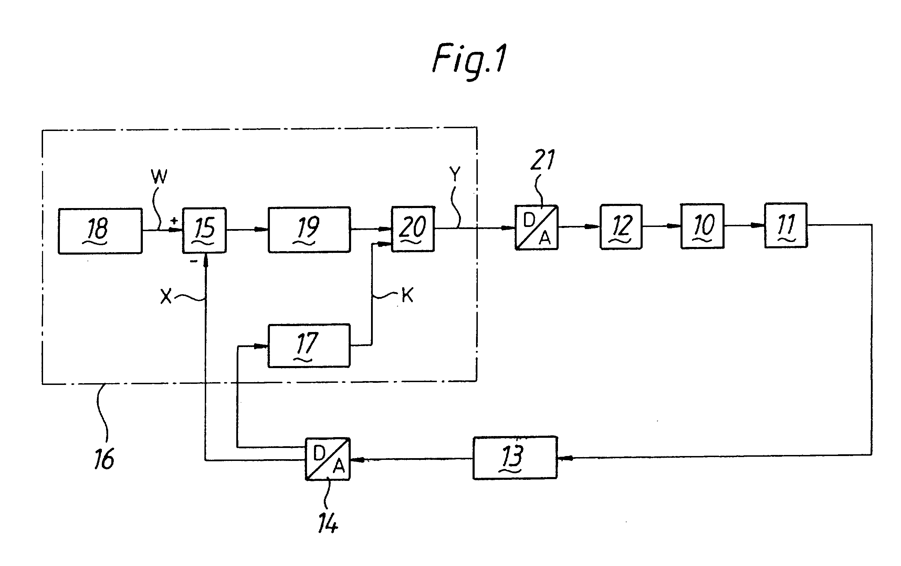

In Fig.1 ist ein erstes Ausführungsbeispiel der Erfindung dargestellt. Die Erfindung weist einen Aktor 10 als Antriebseinheit auf, der einen Tisch 11, beispielsweise einen Mikroskoptisch, auf einer vorgegebenen Bahn von einem

Ort $x_1$ zu einem Ort $x_2$ verfährt. Der Aktor 10 ist als Gleichstrommotor ausgebildet und wird mit einem zum abgebenden Drehmoment proportionalen Strom gespeist. Ein Positionsdetektor 13, der als Winkelschrittgeber, Glasmaßstab oder Interferometer ausgebildet sein kann, erfaßt die aktuelle Lage des Tisches 11. Die von dem Positionsdetektor 13 gemessenen Positionswerte werden als Regelgröße X über einen Analog/Digital-Wandler 14 zum einen einer Vergleichseinheit 15 und zum anderen einer Kompensationseinheit 17 zugeführt. In der Vergleichseinheit 15 wird die Regelgröße X von der von einer Führungsgrößeneinheit 18 abgegebenen Führungsgröße W subtrahiert. Die Führungsgrößeneinheit 18 dient dazu, die manuell eingegebene Zielposition x2 in einen digitalen Spannungswert umzusetzen und als Führungsgröße W der Vergleichseinheit 15 zuzuleiten. Die von der Vergleichseinheit 15 ermittelte Regeldifferenz wird einer Reglereinheit 19 zugeleitet. Die Reglereinheit 19 weist einen digitalen Regler in Form eines PID-Algorithmus auf. Abhängig vom Einzelfall können auch weitere übliche Regalgorithmen, wie zum Beispiel P- oder PI-Algorithmen verwendet werden, um einen Bahnfehler auszuregeln. Die Ausgangsgröße der Reglereinheit 19 wird einer Addiereinheit 20 zugeleitet, in der sie zu einer von der Kompensationseinheit 17 abgegebenen Kompensationsgröße K addiert wird.

In der Kompensationseinheit 17 wird fortlaufend die das System bzw. die Regelstrecke charakterisierende Bewegungsgleichung gelöst und die der Bewegung des Tisches 11 entgegenstehenden Kräfte bestimmt. Die Summe dieser Kräfte wird als Kompensationsgröße K der Addiereinheit 20 zugeleitet.

Unter Zugrundelegung einer Differentialgleichung 2. Ordnung,

$$f(x) = a + bx + c\dot{x} + d\ddot{x}$$

wobei a eine konstante Kraft darstellt, beispielsweise die Gewichtskraft, b eine Federkonstante, c einen Reibungskoeffizienten und d die Masse des Tisches 11 darstellt, sowie $x$ den Ort des Tisches 11 angibt, läßt sich die Kompensationsgröße K nach drei Zeitintervallschritten T bestimmen. Dies folgt nach Umwandlung der Differentialgleichung in eine Differenzen-Gleichung aus:

$$f_N = a + bx_N + \frac{c}{T}(x_N - x_{N-1}) + \frac{d}{T^2}(x_N - 2x_{N-1} + x_{N-2})$$

Zur Erlangung der Kompensationsgröße K wird nach einem ersten Zeitintervall T der Ort $x_1$ ermittelt Nach einem weiteren Zeitintervall T liefert der Positionsdetektor 13 einen weiteren Ortswert $x_2$, aus dem durch Differenzbildung zum Ort $x_1$ bei bekanntem Zeitintervall T die momentane Geschwindigkeit berechnet werden kann. Nach einem weiteren Zeitintervall T läßt sich die Beschleunigung ermitteln. Durch ständiges Messen der Lage des Tisches 11 und gleichzeitiges Lösen der Differenzen-Gleichung der Regelstrecke läßt sich ständig die Kompensationsgröße K ermitteln, die dafür sorgt, daß das System den augenblicklichen Bewegungszustand zu erhalten trachtet Dies bewirkt, daß die hinzuaddierte Ausgartgsgröße der Reglereinheit 19 klein sein kann und somit ein scheinbar kräftefreies ideales System vorfindet

Die von der Addiereinheit 20 abgegebene Stellgröße Y wird einem Digital/Analog-Wandler 21 zugeleitet, der die Stellgröße Y analogisiert und einem Treiber 12 zuführt, der vorzugsweise als spannungsgesteuerte Stromquelle arbeitet und den Spannungswert der Stellgröße Y in einen dem Drehmoment proportionalen Stromwert umsetzt.

Die Steuerung bzw. Regelung des Tisches 11 erfolgt somit auf digitale Weise. Sowohl die Reglereinhelt 19, die Kompensationseinheit 17 als auch die Führungsgrößeneinheit 18' sind Bestandteil eines Digitalrechners 16. Auf diese Weise wird eine einfache Ausregelung des Bahnfehlers ermöglicht.

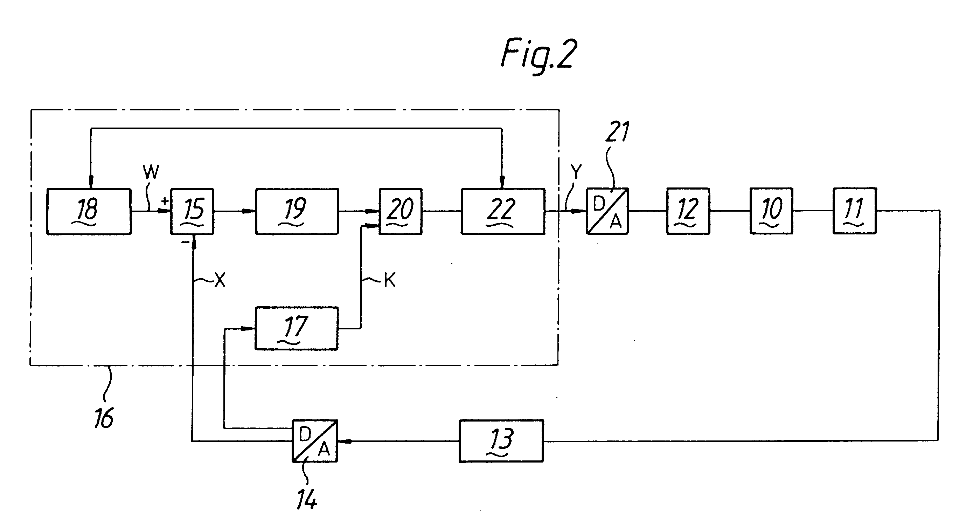

Nach einem zweiten Ausführungsbeispiel gemäß Fig.2 weist die Erfindung zusätzlich eine Stelleinheit 22 auf. Die in Fig.2 dargestellten, mit den jeweiligen Bauteilen des ersten Ausführungsbeispiels übereinstimmenden Bauteile weisen die gleichen Bezugsziffern auf.

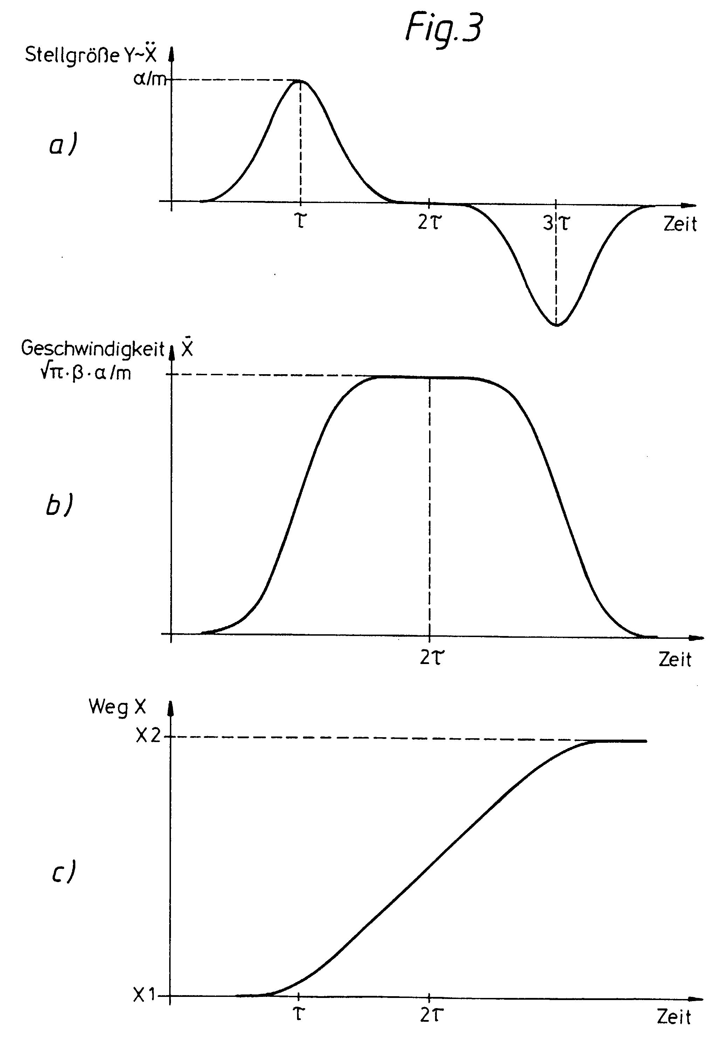

In der Stelleinheit 22 wird eine Stellgröße Y erzeugt, die die Form einer Gaußschen Glockenkurve aufweist Wie aus Fig.3a zu ersehen ist, besteht die Stellgröße aus einem positiven und einem negativen sprungfreien bzw. knickfreien Impuls. Durch die sprungfreie Ausbildung des zeitlichen Verlaufs der Stellgröße Y wird vermieden, daß zum einen der in der Reglereinheit 19 erzeugte Regel-Algorithmus destabilisiert wird und zum anderen zusätzliche Systemschwingungen in Folge eines Kraftsprunges auftreten. Es wird hierdurch eine ruckfreie Bewegung des Tisches 11 bewirkt. Die Ruckfreiheit der Bewegung des Tisches 11 ist insbesondere dann wichtig, wenn es sich bei dem Tisch 11 um einen schweren Mikroskoptisch handelt.

Als Gleichungen für die Stellgröße Y, die der Beschleunigung $\ddot{x}$ proportional ist sowie der Geschwindigkeit $\dot{x}$ und dem Weg x ergeben sich:

$$\ddot{x}(t) = \frac{\alpha}{m}\left( \exp^{-\left(\frac{t+\tau}{\beta}\right)^2} - \exp^{-\left(\frac{t-\tau}{\beta}\right)^2} \right)$$

$$\dot{x}(t) = \frac{\sqrt{\pi}\alpha\beta}{2m}\left[ erf\left(\frac{t+\tau}{\beta}\right) - erf\left(\frac{t-\tau}{\beta}\right) \right]$$

$$x(t) = \frac{\sqrt{\pi}\alpha\beta^2}{2m}\left[ \frac{2\tau}{\beta} + \left(\frac{t+\tau}{\beta}\right)erf\left(\left(\frac{t+\tau}{\beta}\right)\right) - \left(\frac{t-\tau}{\beta}\right)erf\left(\left(\frac{t-\tau}{\beta}\right)\right) + \frac{1}{\sqrt{\pi}}\left( \exp^{-\left(\frac{t+\tau}{\beta}\right)^2} - \exp^{-\left(\frac{t-\tau}{\beta}\right)^2} \right) \right]$$

m = Masse
$\alpha$ = Beschleunigungsparameter
$\beta$ = Kraftpulsbreite
$\tau$ = Abstand zwischen Beschleunigungs- und Bremspuls
erf() Error Function nach Abramowitz,
"Handbook of Mathematical Functions", Präzision: 3e-7, Dover Publications Inc., New York 1970, pp. 235.

Durch Vorgabe der Kraftpulsbreite $\beta$ und der Beschleunigungsparameter ergibt sich die maximal zu erreichende Geschwindigkeit, siehe Fig.3b. Durch Einstellung des Wertes $\tau$ läßt sich die zurückzulegende Wegstrecke zwischen dem Ort $x_1$ und dem Ort $x_2$ einstellen. Aus dem Verlauf der Stellgröße Y läßt sich durch zweimalige Integration der zeitliche Verlauf des Ortes gemäß Fig.3c ermitteln. Diese Ortsfunktion wird, nachdem der gewünschte Zielort $x_2$ eingegeben worden ist, der Führungsgrößeneinheit 18 übergeben und in dieser als Führungsgrößefunktion ausgegeben. Die Abweichungen von der gewünschten Bahn werden dann von der Reglereinheit 19 ausgeregelt.

Darüber hinaus kann auch die Führungsgröße W selbst glockenförmig nach Art einer Gauß'schen Glockenform in der Führungseinheit 18 ausgebildet werden. Damit könnte die Stelleinheit 22 wegfallen.

Alternativ dazu könnte der Verlauf des Ortes durch die Aneinanderreihung von Geraden gebildet werden. Durch eine anschließende Filterung in einem Tiefpaß würde sich ebenfalls eine sprungfreie Form der Stellgröße Y ergeben.

Vorzugsweise werden die zeitlichen Verläufe der Stellgröße Y, der Geschwindigkeit und des Ortes mittels eines Rechenprogrammes in einem Digitalrechner ermittelt.

Mit der Erfindung wird eine weitgehend ruckfreie Bewegung, insbesondere von Tischen, Robotern und Fo-kusantrieben in Mikroskopsystemen oder Kameraführungen erzielt. Die Erfindung läßt sich überall dort anwenden, wo Gegenstände möglichst schnell und ruckfrei auf einer programmierten Bahn bewegt werden sollen.

## Patentansprüche

1.  Vorrichtung zur Regelung der Bewegung eines Gegenstandes, insbesondere zur Positionierung eines Tisches (11) oder Roboterarms, auf einer vorgegebenen Bahn mit einer Antriebseinheit (Aktor 10) zum Antreiben des Gegenstands, mit einem Positionsdetektor (13) zur Messung der aktuellen Lage des Gegenstands, mit einer Vergleichseinheit (15) zur Subtrahierung der von dem Positionsdetektor (13) erfaßten Regelgröße (X) von einer Führungsgröße (W) und mit einer der Vergleichseinheit (15) nachgeschalteten Reglereinheit (19), **dadurch gekennzeichnet** daß eine Kompensationseinheit (17) vorgesehen ist, die die Signale des Positionsdetektors (13) in kurzen Zeitintervallen (T) empfängt und in der daraus ständig mindestens eine den Zustand des Systems (Regelstrecke) beschreibende Bewegungsgleichung mittels eines Mikroprozessors gelöst wird, derart, daß die Bewegungsgleichung mindestens gemäß einer ihrer Ordnung entsprechenden Anzahl von Zeitintervallen (T) gelöst ist und daß die Summe der auf das System (Regelstrecke) wirkenden Kräfte ermittelt wird zur Bildung einer Kompensationsgröße (K) und daß diese Kompensationsgröße (K) als Bestandteil einer Stellgröße (Y) auf das System (Regelstrecke) gegeben wird, wodurch die auf das System (Regelstrecke) wirkenden Kräfte kompensiert werden und somit ein für die Regelgröße (X) nahezu kräftefreies System (Regelstrecke) erzeugt wird.

2. Vorrichtung nach Anspruch 1, **dadurch gekennzeichnet,** daß die Ausgangsgröße der Reglereinheit (19) und die Ausgangsgröße (Kompensationsgröße K) der Kompensationseinheit (17) in einer Addiereinheit (20) addiert werden zur Bildung der Stellgröße (Y).

3. Vorrichtung nach Anspruch 1 oder 2, **dadurch gekennzeichnet**, daß die Regelgröße (X) die Eingangsgröße der Kompensationseinheit (17) bildet.

4. Vorrichtung nach einem oder mehreren der Ansprüche 1 bis 3, **dadurch gekennzeichnet**, daß die Reglereinheit (19) und die Kompensationseinheit (17) digital ausgebildet und in einem einzigen Digitalrechner (16) angeordnet sind.

5. Vorrichtung nach einem oder mehreren der Ansprüche 1 bis 4, **dadurch gekennzeichnet**, daß eine Führungsgrößeneinheit (18) angeordnet ist, in der die Führungsgröße (W) derart gebildet wird, daß der zeitliche Verlauf der auf das System (Regelstrecke) gegebenen Stellgröße (Y) sprung- oder knickfrei ausgebildet ist.

6. Vorrichtung nach einem oder mehreren der Ansprüche 1 bis 5, **dadurch gekennzeichnet**, daß die Führungsgröße (W) in der Führungsgrößeneinheit (18) derart gebildet wird, daß die Stellgröße (Y) glockenförmig über die Zeit verläuft, insbesondere nach Art einer Gaußschen Glockenkurve.

7. Verfahren zur Regelung der Bewegung eines Gegenstandes, insbesondere zur Positionierung eines Tisches (11) oder Roboterarms, auf einer vorgegebenen Bahn, wobei der Gegenstand von einer Antriebseinheit (Aktor 10) angetrieben wird, die aktuelle Lage des Gegenstandes durch einen Positionsdetektor (13) gemessen wird und als Regelgröße (X) einer Vergleichseinheit (15) zugeführt wird, in der die Regelgröße (X) von einer Führungsgröße (W) subtrahiert wird und nachfolgend einer Reglereinheit (19) zugeführt wird, **dadurch gekennzeichnet,** daß die Position des Gegenstandes mit Hilfe des Positionsdetektors (13) in kurzen Zeitintervallen (T) gemessen und dadurch die tatsächliche Bewegung des Gegenstandes ständig erfaßt wird und daß daraus in einer Kompensationseinheit (17) die der Stellgröße (Y) entgegenwirkenden Kräfte durch Lösung der Bewegungsgleichung des Systems (Regelstrecke) laufend bestimmt werden, wobei die Bewegungsgleichung des Systems (Regelstrecke) mindestens gemäß einer ihrer Ordnung entsprechenden Anzahl von Zeitintervallen (T) gelöst wird, und daß daraus ständig eine Kompensationsgröße (K) ermittelt wird, die zur Bildung der Stellgröße (Y) beiträgt und dadurch auf das System (Regelstrecke) einwirkt und ein für die Regelgröße (X) nahezu kräftefreies System (Regelstrecke) erzeugt.

## Claims

1. Device for the regulation of the movement of an object, in particular for the positioning of a table (11) or robot arm, on a predetermined path with a drive unit (actuator 10) for the driving of the object, with a position detector (13) for the measurement of the actual position of the object, with a comparison unit (15) for subtracting the regulating magnitude (X) detected by the position detector (13) from a guide magnitude (W) and with a regulator unit (19) connected behind the comparison unit (15), characterised in that a compensation unit (17) is provided, which receives the signals of the position detector (13) in short time intervals (T) and in which at least one movement equation describing the state of the system (regulating section) is constantly solved therefrom by means of a microprocessor in such a manner that the movement equation is solved at least according to a number of time intervals (T), which corresponds with its order, and that the sum of the forces acting on the system (regulating section) is ascertained for the formation of a compensation magnitude (K) and that this compensation magnitude (K) is applied to the system (regulating section) as component of a setting magnitude (Y), whereby the forces acting on the system (regulating section) are compensated for and an almost force-free system (regulating section) is thus produced for the regulating magnitude (X).

2. Device according to claim 1, characterised in that the output magnitude of the regulator unit (19) and the output magnitude (compensation magnitude K) of the compensation unit (17) are added in an adding unit (20) for the formation of the setting magnitude (Y).

3. Device according to claim 1 or 2, characterised in that the regulating magnitude (X) forms the input magnitude of the compensation unit (17).

4. Device according to one or more of the claims 1 to 3, characterised in that the regulator unit (19) and the compensation unit (17) are formed to be digital and arranged in a single digital computer (16).

5. Device according to one or more of the claims 1 to 4, characterised in that a guide magnitude unit (18) is arranged, in which the guide magnitude (W) is formed in such a manner that the temporal course of the setting magnitude (Y) applied to the system (regulating section) is formed to be free of steps or kinks.

6. Device according to one or more of the claims 1 to 5, characterised in that the guide magnitude (W) is formed in such a manner in the guide magnitude (18) that the setting magnitude (Y) extends in bell shape as a function of time, in particular in the manner of a Gaussian bell curve.

7. Method for the regulation of the movement of an object, in particular for the positioning of a table (11) or robot arm, on a predetermined path, wherein the object is driven by a drive unit (actuator 10), the actual position of the object is measured by a position detector (13) and fed as regulating magnitude (X) to a comparison unit (15), in which the regulating magnitude (X) is subtracted from a guide magnitude (W) and subsequently fed to a regulator unit (19), characterised in that the position of the object is measured in short time intervals (T) with the aid of the position detector (13) and the actual movement of the object is constantly detected thereby and that the forces counteracting the setting magnitude (Y) are continuously determined therefrom in a compensation unit (17) by solution of the movement equation of the system (regulating section), wherein the movement equation of the system (regulating section) is solved at least according to a number of time intervals (T), which corresponds with its order, and that a compensating magnitude (K) is constantly ascertained therefrom, which contributes to the formation of the setting magnitude (Y) and thereby acts on the system (regulating section) and produces an almost force-free system (regulating section) for the regulating magnitude (X).

**Revendications**

1. Dispositif pour la régulation du mouvement d'un objet, en particulier pour le positionnement d'une table (11) ou d'un bras de robot sur une voie prédéterminée avec une unité d'entraînement (acteur 10) pour l'entraînement de l'objet, avec un détecteur de position (13) pour la mesure de la position réelle de l'objet, avec une unité de comparaison (15) pour la soustraction de la grandeur de régulation (X) saisie par un détecteur de position (13), d'une grandeur de guidage, et une unité de régulateur (19) placée derrière l'unité de comparaison (15), caractérisé en ce qu'une unité de compensation (17) est prévue, qui reçoit les signaux du détecteur de position (13) en de cours intervalles de temps (T) et dans laquelle est résolue constamment au moins une équation de mouvement suivant l'état du système (course de régulation) au moyen d'un microprocesseur de façon que l'équation de mouvement soit résolue au moins selon un nombre d'intervalles de temps (T) correspondant à son ordre et que la somme des forces agissant sur le système (course de régulation) soit obtenue pour la formation d'une grandeur de compensation (K) et que cette grandeur de compensation (K) soit donnée en tant que constituant d'une grandeur de réglage (Y) au système (course de régulation) ce par quoi les forces agissant sur le système (course de régulation) sont compensées et ainsi est produit un système (course de régulation) presque sans force pour la grandeur de régulation (X).

2. Dispositif de la revendication 1, caractérisé en ce que la grandeur de sortie de l'unité de régulateur (19) et la grandeur de sortie (grandeur de compensation K) de l'unité de compensation (17) sont additionnées dans une unité d'addition (20) pour la formation de la grandeur de réglage (Y).

3. Dispositif selon la revendication 1 ou 2, caractérisé en ce que la grandeur de réglage (X) forme la grandeur à l'entrée de l'unité de compensation (17).

4. Dispositif selon l'une quelconque des revendications 1 à 3, caractérisé en ce que l'unité de régulateur (19) et l'unité de compensation (17) sont de configuration numérique et sont agencées dans un calculateur numérique unique (16).

5. Dispositif selon l'une quelconque des revendications 1 à 4, caractérisé en ce qu'une unité de grandeur de guidage (18) est agencée, dans laquelle la grandeur de guidage (W) est configurée de façon que le tracé dans le temps de la grandeur de réglage (Y) donnée au système (course de régulation) soit formé sans à-coup ou sans inflexion.

6. Dispositif selon l'une quelconque des revendications 1 à 5, caractérisé en ce que la grandeur de guidage (W) dans l'unité de grandeur de guidage (18) est formée de façon que la grandeur de réglage (Y) ait un tracé en cloche avec le temps, en particulier du type courbe en cloche de Gauss.

7. Procédé pour la régulation du mouvement d'un objet, en particulier pour le positionnement d'une table (11) ou d'un bras de robot, sur une voie prédéterminée, où l'objet est entraîné par une unité d'entraînement (acteur 10), la position réelle de l'objet est mesurée par un détecteur de position (13) et est conduite en tant que grandeur de réglage (X) à une unité de comparaison (15), dans laquelle la grandeur de réglage (X) est soustraite d'une grandeur de guidage (W) et est ensuite conduite à une unité de régulateur (19), caractérisé en ce que la position de l'objet est mesurée à l'aide du détecteur de position (13) à de courts intervalles de temps et de ce fait, le mouvement réel de l'objet est saisi constamment et en ce que de plus, dans une unité de compensation (17) les forces s'opposant à la grandeur de réglage (Y) sont déterminées continuellement par résolution d'une équation de mouvement du système (course de régulation), où l'équation de mouvement du système (course de régulation) est résolue au moins selon un nombre d'intervalles de temps (T) correspondant à son ordre, et en ce qu'à la suite de cela, une grandeur de compensation (K) est obtenue constamment, qui collabore à la formation de la grandeur de réglage (Y) et agit ainsi sur le système (course de régulation) et produit un système presque sans force pour la grandeur de régulation (X) (course de régulation).

Fig.1

Fig.2

EP 0 792 480 B1

# Fig.3

a)

Stellgröße Y~Ẍ

$\alpha/m$

$\tau$  $2\tau$  $3\tau$  Zeit

b)

Geschwindigkeit Ẋ

$\sqrt{\pi}\cdot\beta\cdot\alpha/m$

$2\tau$  Zeit

c)

Weg X

X2

X1

$\tau$  $2\tau$  Zeit